# EUROPÄISCHE PATENTSCHRIFT

(11) **EP 0 966 498 B1**
(45) Veröffentlichungstag und Bekanntmachung des Hinweises auf die Patenterteilung: **27.06.2001**
(21) Anmeldenummer: 98908109.6
(22) Anmeldetag: 23.02.1998
(51) Int. Cl.: C08G 73/02, D21H 21/16

(54) **WÄSSRIGE DISPERSIONEN VON REAKTIVLEIMUNGSMITTELN, VERFAHREN ZU IHRER HERSTELLUNG UND IHRE VERWENDUNG**
AQUEOUS DISPERSIONS OF REACTIVE GLUING AGENTS, METHOD FOR THE PRODUCTION, AND USE THEREOF
DISPERSIONS AQUEUSES D'AGENTS REACTIFS DE COLLAGE, LEUR PROCEDE DE FABRICATION ET LEUR UTILISATION

(30) Priorität: 14.03.1997 DE 19710616
(43) Veröffentlichungstag der Anmeldung: 29.12.1999
(73) Patentinhaber: BASF AKTIENGESELLSCHAFT, 67056 Ludwigshafen (DE)
(72) Erfinder: ETTL, Roland, D-67454 Hassloch (DE); SCHUHMACHER, Rudolf, D-67459 Böhl-Iggelheim (DE); BONN, Johann, D-67258 Hessheim (DE); REUTHER, Wolfgang, D-69118 Heidelberg (DE); UTECHT, Jens, D-68809 Neulussheim (DE); JULIUS, Manfred, D-67117 Limburgerhof (DE)
(86) Internationale Anmeldenummer: EP9801032
(87) Internationale Veröffentlichungsnummer: WO9841565

(56) Entgegenhaltungen:
- DE-A- 3 316 179
- POPPEL, EMANUEL ET AL: "Über den Mechanismus der Papierleimung mit Alkyldiketenen; Die Retention der Alkyldiketene beeinflussende Faktoren; Wechselbeziehungen zur Wirksamkeit der Papierleimung" CELLUL. CHEM. TECHNOL. (1985), 19(6), 707-18 CODEN: CECTAH;ISSN: 0576-9787, 1985, XP002065071

## Beschreibung

Die Erfindung betrifft wäßrige Dispersionen von Reaktivleimungsmitteln mit einem Gehalt von 0,1 bis 10 Gew.-% an wasserlöslichen oder wasserdispergierbaren polymeren Schutzkolloiden, Verfahren zu ihrer Herstellung durch Dispergieren der Reaktivleimungsmittel in einer wäßrigen Mischung von Schutzkolloiden und die Verwendung der wäßrigen Dispersionen von Reaktivleimungsmitteln als Masseleimungsmittel bei der Herstellung von Papier, Pappe und Karton sowie zur Hydrophobierung von Zellulosefasern.

Reaktivleimungsmittel sind beispielsweise Alkyldiketene oder Alkenylbernsteinsäureanhydride. Die Reaktivleimungsmittel werden üblicherweise in Form von wäßrigen Dispersionen, die mit Hilfe von Schutzkolloiden stabilisiert sind, als Masseleimungsmittel bei der Herstellung von Papier, Pappe und Karton verwendet. Um wäßrige Dispersionen von Fettalkyldiketenen zu stabilisieren, hat man bereits verschiedene Stoffe verwendet. So ist beispielsweise aus der US-A-2 901 371 und der US-A-3 311 532 bekannt, höhere Fettsäuren, ihre Anhydride, Amide, Aldehyde oder Säurechloride als Stabilisator zu verwenden. Fettalkyldiketene werden üblicherweise mit Hilfe von kationischer Stärke als Schutzkolloid unter Einwirkung von Scherkräften zu gebrauchsfertigen Leimungsmitteldispersionen verarbeitet.

Gemäß der Lehre der DE-A-3 316 179 erhält man 4 bis 12 %ige wäßrige Alkyldiketendispersionen, wenn man Alkyldiketene in Gegenwart von kationischer Stärke und einem kationischen Schutzkolloid in Wasser dispergiert, wobei das Schutzkolloid ein wasserlösliches Kondensationsprodukt ist, das durch Pfropfen von Polyamidoaminen mit Ethylenimin und Vernetzen der mit Ethylenimin gepfropften Polyamidoamine mit mindestens bifunktionellen Vernetzern erhältlich ist. Um die Stabilität der wäßrigen Dispersion zu erhöhen, müssen wasserlösliche Dicyandiamid-Formaldehyd-Kondensationsprodukte zugefügt werden. Gemäß den Angaben in den Beispielen beträgt die Alkyldiketenkonzentration in den wäßrigen Dispersionen 6 Gew.-%.

Aus der WO-A-96/26318 sind wäßrige Alkyldiketendispersionen bekannt, die ein C₁₄- bis C₂₂-Alkyldiketen und 1 bis 10 Gew.-% eines polymeren Schutzkolloids enthalten. Als Schutzkolloid kann man u.a. Kondensationsprodukte einsetzen, die durch teilweise Amidierung von Polyethyleniminen mit Monocarbonsäuren erhältlich sind. Die Schutzkolloide können jedoch auch gegebenenfalls aus Umsetzungsprodukten bestehen, die durch Reaktion von teilweise amidierten Polyalkylenpolyaminen mit mindestens bifunktionellen Vernetzern erhältlich sind. Wie aus dieser Veröffentlichung hervorgeht, kann man allein mit solchen Schutzkolloiden stabile Alkyldiketendispersionen herstellen, ohne kationische Stärke einsetzen zu müssen.

Die Verwendung von wäßrigen Dispersionen von Alkenylbernsteinsäureanhydriden ist bekannt, vgl. EP-A-0 609 879, EP-A-0 593 075 oder US-A-3,102,064.

Der vorliegenden Erfindung liegt die Aufgabe zugrunde, gegenüber dem Stand der Technik weitere wäßrige Dispersionen von Reaktivleimungsmitteln zur Verfügung zu stellen.

Die Aufgabe wird erfindungsgemäß gelöst mit wäßrigen Dispersionen von Reaktivleimungsmitteln mit einem Gehalt von 0,1 bis 10 Gew.-% an wasserlöslichen oder wasserdispergierbaren polymeren Schutzkolloiden, wenn sie als Schutzkolloide Umsetzungsprodukte enthalten, die durch Reaktion von Aminogruppen enthaltenden Polymeren aus der Gruppe der
- Vinylamineinheiten enthaltenden Polymerisate
- Polyamidoamine
- mit Ethylenimin gepfropften Polyamidoamine
mit Diketenen im Gewichtsverhältnis Polymer zu Diketen von 10000 : 1 bis 1 : 3 erhältlich sind.

Besonders bevorzugte Schutzkolloide sind Umsetzungsprodukte, die durch Reaktion der genannten Aminogruppen enthaltenden Polymeren mit Diketenen im Gewichtsverhältnis 500 : 1 bis 1 : 1 erhältlich sind.

Gegenstand der Erfindung ist außerdem ein Verfahren zur Herstellung der genannten wäßrigen Dispersionen von Reaktivleimungsmitteln, wobei man die Reaktivleimungsmittel in Form einer Schmelze in einer wäßrigen Mischung mindestens eines der oben genannten Schutzkolloide bei Temperaturen von 20 bis 90°C unter Einwirkung von Scherkräften homogenisiert.

Die so erhältlichen wäßrigen Dispersionen von Reaktivleimungsmitteln werden als Masseleimungsmittel bei der Herstellung von Papier, Pappe und Karton sowie zur Hydrophobierung von Zellulosefasern verwendet.

Bevorzugt eingesetzte Reaktivleimungsmittel sind Alkyldiketene, wobei C₁₄- bis C₂₂-Alkyldiketene oder deren Mischungen besonders bevorzugt sind. Beispiele für solche Verbindungen sind Tetradecyldiketen, Hexadecyldiketen, Octadecyldiketen, Eicosyldiketen, Docosyldiketen, Palmityldiketen, Stearyldiketen und Behenyldiketen. Die Alkylgruppen der Diketene können auch unterschiedliche Bedeutung haben. Beispiele hierfür sind Stearylpalmityldiketen, Behenylstearyldiketen, Behenyloleyldiketen oder Palmitylbehenyldiketen. Vorzugsweise verwendet man als Leimungsmittel Stearyldiketen, Lauryldiketen, Palmityldiketen, Oleyldiketen, Behenyldiketen oder deren Gemische. Die Konzentration der Diketene in den wäßrigen Dispersionen beträgt beispielsweise 6 bis 40, vorzugsweise 10 bis 25 Gew.-%.

Weitere Reaktivleimungsmittel sind cyclische Dicarbonsäureanhydride der Formel 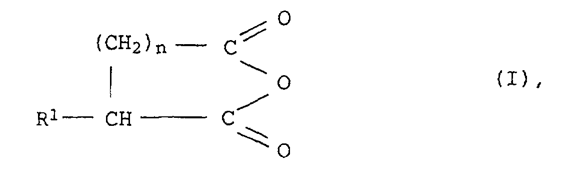 in der
- R¹ =: C₅- bis C₂₂-Alkyl, C₅- bis C₂₂-Alkenyl und
- n =: 1 oder 2 ist.

Solche Leimungsmittel sind bekannt, vgl. EP-A-0 593 075, EP-A-0 609 879 oder US-A-3,102,064.

Vorzugsweise verwendet man aus dieser Gruppe von Reaktivleimungsmitteln Alkenylbernsteinsäureanhydride, deren Alkenylgruppe 5 bis 22 C-Atome hat. Beispiele sind Umsetzungsprodukte von C₁₆- bis C₂₀-α-Olefinen mit Maleinsäureanhydrid. Die α-Olefine können linear oder verzweigt sein.

Um stabile wäßrige Dispersionen von Reaktivleimungsmitteln herzustellen, benötigt man Schutzkolloide. Gemäß der vorliegenden Erfindung werden diese Schutzkolloide durch Reaktion von Aminogruppen enthaltenden Polymeren aus der Gruppe der Vinylamin-Einheiten enthaltenden Polymerisate, der Polyamidoamine und der mit Ethylenimin gepfropften Polyamidoamine mit Diketenen im GewichtsVerhältnis Polymer zu Diketen von 10000 : 1 bis 1 : 3 hergestellt. Vinylamin-Einheiten enthaltende Polymerisate sind bekannt, vgl. US-A-4 421 602, EP-B-0 216 837 und EP-B-0 251 182. Die Vinyl-Einheiten enthaltenden Copolymerisate werden bekanntlich durch Polymerisieren von acyclischen N-Vinylcarbonsäureamiden, vorzugsweise N-Vinylformamid, und anschließende Hydrolyse der Polymeren durch Einwirkung von Säuren oder Basen hergestellt. So erhält man beispielsweise durch Homopolymerisation von N-Vinylformamid und anschließende vollständige Hydrolyse der Poly-N-formamide durch vollständige Abspaltung von Formylgruppen aus den Vinylformamid-Einheiten des Homopolymerisats Polyvinylamine. Wenn die Hydrolyse nur partiell durchgeführt wird, entstehen Polymere, die neben Vinylamin-Einheiten noch Einheiten des nicht hydrolysierten N-Vinylcarbonsäureamids enthalten. Solche Polymeren sind beispielsweise in der oben angegebenen US-A-4 421 602 beschrieben.

Außerdem kommen Copolymere in Betracht, die neben den Vinylamin-Einheiten bis zu 99,9 mol-%, vorzugsweise bis zu 95 Mol-% andere Einheiten ethylenisch ungesättigter Monomere enthalten. Zu nennen sind beispielsweise N-Vinyl-N-methylformamid, N-Vinyl-N-ethylformamid, N-Viny-N-propylformamid, N-Vinyl-N-isopropylformamid, N-Vinyl-N-butylformamid, N-Vinyl-N-sek.butylformamid, N-Vinyl-N-tert.butylformamid, N-Vinyl-N-pentylformamid, Vinylalkohol sowie Vinylester von gesättigten Carbonsäuren mit 1 bis 6 Kohlenstoffatomen, z.B. Vinylformiat, Vinylacetat, Vinylpropionat und Vinylbutyrat. Geeignet sind auch Copolymere mit ungesättigten C₃- bis C₈-Carbonsäuren, wie z.B. Acrylsäure, Methacrylsäure, Maleinsäure, Crotonsäure, Itaconsäure und Vinylessigsäure sowie den Alkali- und Erdalkalimetallsalzen, Estern, Amiden und Nitrilen der genannten ethylenisch ungesättigten Carbonsäuren, beispielsweise Methylacrylat, Methylmethacrylat, Ethylacrylat, Ethylmethacrylat, Propylacrylat und Butylacrylat oder mit Glykol- bzw. Polyglykolestern ethylenisch ungesättigter Carbonsäuren, wobei jeweils nur eine OH-Gruppe der Glykole und Polyglykole verestert ist, z.B. Hydroxyethylacrylat, Hydroxyethylmethacrylat, Hydroxypropylacrylat, Hydroxypropylmethacrylat, Hydroxybutylacrylat, Hydroxybutlymethacrylat oder auch mit Acrylsäure- und Methacrylsäuremonoestern von Polyalkylenglykolen eines Molgewichts von 1500 bis 10000. Geeignet sind auch Copolymere, die Ester von ethylenisch ungesättigten Carbonsäuren mit Aminoalkoholen, wie z.B. Dimethylaminoethylacrylat, Dimethylaminoethylmethacrylat, Diethylaminoethylacrylat, Diethylaminoethylmethacrylat, Dimethylaminopropylacrylat, Dimethylaminopropylmethacrylat, Diethylaminopropylacrylat, Diethylaminopropylmethacrylat, Dimethylaminobutylacrylat und Diethylaminobutylacrylat enthalten. Die basischen Acrylate liegen dabei in Form der freien Basen, der Salze mit Mineralsäuren wie z.B. Salzsäure, Schwefelsäure und Salpetersäure, der Salze organischer Säuren wie Ameisensäure oder Benzolsulfonsäure, oder in quaternisierter Form vor. Geeignete Quaternisierungsmittel sind beispielsweise Dimethylsulfat, Diethylsulfat, Methylchlorid, Ethylchlorid oder Benzylchlorid.

Außerdem eignen sich Copolymere, die außer Vinylamin-Einheiten zusätzlich Einheiten ungesättigter Amide wie beispielsweise Acrylamid, Methacrylamid sowie N-Alkylmono- und -diamide mit Alkylresten von 1 bis 6 C-Atomen, z.B. N-Methylacrylamid, N,N-Dimethylacrylamid, N-Methylmethacrylamid, N-Ethylacrylamid, N-Propylacrylamid und tert.Butylacrylamid sowie basische (Meth-)acrylamide, wie z.B. Dimethylaminoethylacrylamid, Dimethylaminoethylmethacrylamid, Diethylaminoethylacrylamid, Diethylaminoethylmethacrylamid, Dimethylaminopropylacrylamid, Dimethylaminopropylmethacrylamid, Diethylaminopropylacrylamid und Diethylaminopropylmethacrylamid einpolymerisiert enthalten.

Auch Copolymere mit Einheiten von C₁- bis C₆-Alkylvinylethern, z.B. Vinylmethylether, Vinylethylether, Vinylpropylether, Vinylisopropylether, Vinylbutylether, Vinylisobutylether, Vinylpentylether und Vinylhexylether können eingesetzt werden.

Weiterhin kommen in Frage Copolymere mit Einheiten von N-Vinypyrrolidon, N-Vinylcaprolactam, N-Vinylharnstoff und substituierten N-Vinylharnstoffen, beispielsweise N-Vinyl-N'-methylharnstoff, N-Vinyl-N'-dimethylharnstoff und N-Vinylimidazol und substituierten N-Vinylimidazolen wie z.B. N-Vinyl-2-methylimidazol, N-Vinyl-4-methylimidazol, N-Vinyl-5-methylimidazol, N-Vinyl-2-ethylimidazol und N-Vinylimidazolinen wie z.B. N-Vinylimidazolin, N-Vinyl-2-methylimidazolin sowie N-Vinyl-2-ethylimidazolin. Die Imidazol- und Imidazolinfunktionen liegen dabei in Form der freien Basen oder auch neutralisiert mit Mineralsäuren oder organischen Säuren oder auch quaternisiert vor, wobei die Quaternisierung vorzugsweise mit Dimethylsulfat, Diethylsulfat, Methylchlorid oder Benzylchlorid vorgenommen wird.

Schließlich können auch Copolymere eingesetzt werden, die Monomereinheiten mit Sulfogruppen enthalten, wie beispielsweise Vinylsulfonsäure, Allylsulfonsäure, Methallylsulfonsäure, Styrolsulfonsäure oder Acrylsäure-3-sulfopropylester, Methacrylsäure-3-sulfopropylester und 2-Acrylamido-2-methylpropansulfonsäure. Die Säuregruppen aufweisenden Verbindungen können in Form der freien Säuren, der Ammonium-, Alkalimetall- und Erdalkalimetallsalze eingesetzt werden.

Eine weitere Modifizierung der Vinylamineinheiten enthaltenden Polymerisate kann dadurch erzielt werden, daß man bei der Polymerisation der N-Vinylcarbonsäureamid 0 bis 5 mol-% an Monomeren mit mindestens zwei ethylenisch ungesättigten nicht konjugierten Doppelbindungen mit einpolymerisiert. Derartige Comonomere werden üblicherweise bei Copolymerisationen als Vernetzer verwendet. Die Mitverwendung dieser Comonomere während der Copolymerisation bewirkt eine Erhöhung der Molmassen der Copolymerisate. Geeignete Verbindungen dieser Art sind beispielsweise Methylenbisacrylamid, Ester von Acrylsäure und Methacrylsäure mit mehrwertigen Alkoholen, z.B. Glykoldiacrylat, Glycerintriacrylat, Glykoldimethacrylat, Glycerintrimethacrylat sowie mindestens zweifach mit Acrylsäure oder Methacrylsäure veresterte Polyole, wie Pentaerythrit und Glucose. Geeignete Vernetzer sind außerdem Divinylbenzol, Divinyldioxan, Pentaerythrittriallylether, Pentaallylsucrose, Divinylharnstoff und Divinylethylenharnstoff.

Die (Co-)Polymerisation kann in Gegenwart oder auch in Abwesenheit eines inerten Lösungs- oder Verdünnungsmittels durchgeführt werden. Da die Polymerisation in Abwesenheit von inerten Lösungs- oder Verdünnungsmitteln meistens zu uneinheitlichen Polymerisaten führt, ist die Polymerisation in einem inerten Lösungs- oder Verdünnungsmittel bevorzugt. Geeignet sind beispielsweise solche inerten Lösungsmittel, in denen die offenkettigen N-Vinylcarbonsäureamide löslich sind. Für die Lösungspolymerisation eignen sich z.B. inerte Lösungsmittel wie Methanol, Ethanol, Isopropanol, n-Propanol, n-Butanol, Tetrahydrofuran, Dioxan, Wasser, sowie Mischungen der genannten inerten Lösungsmittel. Copolymerisate von N-Vinylcarbonsäureamiden mit Alkylvinylethern können auch in überschüssigen Alkylvinylethern als Löse- und Verdünnungsmittel durch radikalisch initiierte Fällungspolymerisation hergestellt werden. Die Polymerisation kann kontinuierlich oder diskontinuierlich durchgeführt werden. Sie erfolgt in Gegenwart von radikalbildenden Initiatoren, die in Mengen von 0,01 bis 20, vorzugsweise 0,05 bis 10 Gew.-%, bezogen auf die Monomeren, eingesetzt werden. Gegebenenfalls kann die Polymerisation auch allein durch die Einwirkung von energiereicher Strahlung, z.B. Elektronenstrahlen oder UV-Strahlen initiiert werden.

Um Polymerisate mit niedrigen Molekulargewichten z.B. von 1000 bis 100000, vorzugsweise 5000 bis 50000, herzustellen, wird die Polymerisation zweckmäßigerweise in Gegenwart von Reglern durchgeführt. Geeignete Regler sind beispielsweise organische Verbindungen, die Schwefel in gebundener Form enthalten. Hierzu gehören Mercaptoverbindungen, wie Mercaptoethanol, Mercaptopropanol, Mercaptobutanol, Mercaptoessigsäure, Mercaptopropionsäure, Butylmercaptan, Dodecylmercaptan. Als Regler eignen sich außerdem Allylverbindungen, wie Allylalkohol, Aldehyde, wie Formaldehyd, Acetaldehyd, Propionaldehyd, n-Butyraldehyd und Isobutyraldehyd, Ameisensäure, Ammoniumformiat, Propionsäure, Hydrazinsulfat und Butenole. Falls die Polymerisation in Gegenwart von Reglern durchgeführt wird, benötigt man davon z.B. 0,05 bis 20 Gew.-%, bezogen auf die bei der Polymerisation eingesetzten Monomeren.

Die Polymerisation der Monomeren erfolgt üblicherweise in einer Inertgasatmosphäre unter Ausschluß von Luftsauerstoff. Während der Polymerisation wird im allgemeinen für eine gute Durchmischung der Reaktionsteilnehmer gesorgt. Bei kleineren Ansätzen, bei denen eine sichere Abführung der Polymerisationswärme gewährleistet ist, kann man die Monomeren diskontinuierlich polymerisieren, indem man das Reaktionsgemisch auf die Polymerisationstemperatur erhitzt und dann die Reaktion ablaufen läßt. Diese Temperaturen liegen dabei im Bereich von 40 bis 180°C, wobei unter Normaldruck, vermindertem oder auch erhöhtem Druck gearbeitet werden kann. Polymerisate mit einem hohen Molekulargewicht erhält man, wenn man die Polymerisation in Wasser durchführt. Dies kann beispielsweise zur Herstellung wasserlöslicher Polymerisate in wäßriger Lösung, als Wasser-in-Öl-Emulsion oder nach dem Verfahren der umgekehrten Suspensionspolymerisation erfolgen.

Um eine Verseifung der monomeren N-Vinylcarbonsäureamide während der Polymerisation in wäßriger Lösung zu vermeiden, führt man die Polymerisation vorzugsweise in einem pH-Bereich von 4 bis 9, insbesondere von 5 bis 8, durch. In vielen Fällen empfiehlt es sich, zusätzlich noch in Gegenwart von Puffern zu arbeiten, z.B. primärem oder sekundärem Natriumphosphat.

Aus den oben beschriebenen Polymerisaten erhält man durch Hydrolyse der N-Vinylcarbonsäureamid-Einheiten der Gruppierung -CO-R¹ Vinylamin-Einheiten enthaltende Polymerisate nach folgendem Schema: 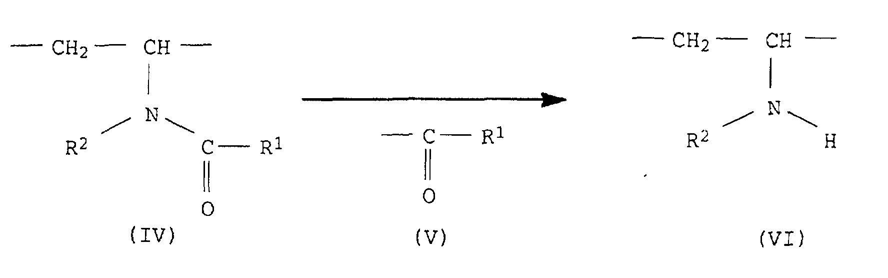 wobei in den Formeln IV, V und VI
- R¹, R² =: H, C₁- bis C₁₂-Alkyl, C₄- bis C₈-Cycloalkyl, Aryl oder Aralkyl bedeuten.

Die Einheiten VI liegen als Amin- bzw. Ammoniumgruppen vor. Die Hydrolyse wird vorzugsweise in Wasser unter Einwirkung von Säuren, Basen oder Enzymen durchgeführt, kann jedoch auch in Abwesenheit der genannten Hydrolysemittel erfolgen. In Abhängigkeit von den Reaktionsbedingungen bei der Hydrolyse, d.h. der Menge an Säure oder Base, bezogen auf das zu hydrolysierende Polymerisat, sowie Reaktionszeit und -temperatur, erhält man verschiedene Hydrolysegrade. Die Hydrolyse wird soweit geführt, daß 0,1 bis 100 mol-%, bevorzugt 1 bis 99 mol-% und ganz besonders bevorzugt 5 bis 95 mol-% der Carbonsäurereste hydrolytisch abgespalten werden.

Für die Hydrolyse geeignete Säuren sind beispielsweise Mineralsäuren, wie Halogenwasserstoff (gasförmig oder in wäßriger Lösung), Schwefelsäure, Salpetersäure, Phosphorsäure (ortho-, meta- oder Polyphoshorsäure) oder organische Säuren, z.B. C₁- bis C₅-Carbonsäuren wie Ameisensäure, Essigsäure oder Propionsäure oder aliphatische und aromatische Sulfonsäuren, wie Methansulfonsäure, Benzolsulfonsäure oder Toluolsulfonsäure.

Bei der Hydrolyse mit Säuren beträgt der pH-Wert beispielsweise 0 bis 5. Pro abzuspaltendem Carbonsäurerest im Polymerisat benötigt man 0,05 bis 1,5, vorzugsweise 0,4 bis 1,2 Äquivalente an Säure.

Bei der Hydrolyse mit Basen können Metallhydroxide von Metallen der ersten und zweiten Hauptgruppe des Periodsystems verwendet werden, beispielsweise Lithiumhydroxid, Natriumhydroxid, Kaliumhydroxid, Calciumhydroxid, Strontiumhydroxid und Bariumhydroxid. Ebenso eignen sich aber auch Ammoniak oder Alkylderivate des Ammoniaks, z.B. Alkyl- oder Arylamine wie Triethylamin, Monoethanolamin, Diethanolamin, Triethanolamin, Morpholin, Piperidin, Pyrrolidin oder Anilin. Bei der Hydrolyse mit Basen beträgt der pH-Wert 8 bis 14. Die Basen können in festem, flüssigem oder gegebenenfalls auch gasförmigem Zustand, verdünnt oder unverdünnt eingesetzt werden. Vorzugsweise verwendet man Ammoniak, Natronlauge, oder Kalilauge. Die Hydrolyse im sauren oder alkalischen pH-Bereich erfolgt bei Temperaturen von 20 bis 170°C, vorzugsweise 50 bis 120°C. Sie ist nach etwa 2 bis 8, vorzugsweise 3 bis 5 Stunden beendet. Besonders bewährt hat sich eine Verfahrensweise, bei der die Säuren oder Basen in wäßriger Lösung zugesetzt werden. Nach der Hydrolyse führt man i.a. eine Neutralisation durch, so daß der pH-Wert der hydrolysierten Polymerlösung 2 bis 8, vorzugsweise 3 bis 7 beträgt. Die Neutralisation ist dann erforderlich, wenn ein Fortschreiten der Hydrolyse von teilweise hydrolysierten Polymerisaten vermieden oder verzögert werden soll. Die Hydrolyse kann auch mit Hilfe von Enzymen vorgenommen werden.

Bei der Hydrolyse von Copolymerisaten, die Einheiten der Formel IV enthalten, tritt gegebenenfalls eine weitere Modifizierung der Polymerisate dahingehend ein, daß die einpolymerisierten Comonomeren ebenfalls hydrolysiert werden. So entstehen beispielsweise aus einpolymerisierten Einheiten von Vinylestern Vinylalkohol-Einheiten. In Abhängigkeit von den Hydrolysebedingungen können die einpolymerisierten Vinylester vollständig oder partiell verseift werden. Bei einer partiellen Hydrolyse von Vinylacetateinheiten enthaltenden Copolymeren enthält das hydrolysierte Copolymerisat neben unveränderten Vinylacetat-Einheiten Vinylalkohol-Einheiten sowie N-Vinylcarbonsäureamid- und Vinylamin-Einheiten. Aus Einheiten monoethylenisch ungesättigter Carbonsäureanhydride, - ester und -amide entstehen bei der Hydrolyse Carbonsäureeinheiten. Einpolymerisierte monoethylenisch ungesättigte Carbonsäuren selbst werden bei der Hydrolyse nicht verändert. Auch aus einpolymerisierten monoethylenisch ungesättigten Nitrilen können Carbonsäureamid- und Carbonsäure-Einheiten gebildet werden, vgl. EP-B-0 251 182. Der Hydrolysegrad der einpolymerisierten Comonomeren kann analytisch leicht bestimmt werden.

Die Vinylamin-Einheiten einpolymerisiert enthaltenden Polymerisate haben z.B. Molekulargewichte von 1000 bis 10 Millionen, vorzugsweise 10000 bis 5 Millionen, was K-Werten von etwa 5 bis 300 vorzugsweise 10 bis 250 entspricht, gemessen an 1 %igen wäßrigen Lösungen bei pH 7 und 25°C nach H. Fikentscher, Cellulose-Chemie, Band 13, 58 bis 64 und 71 bis 74 (1932).

Bevorzugt sind Polymerisate, die Einheiten von
a) 1 bis 100 mol-% Vinylamin (Formel VI mit R² = H) und
b) 0 bis 99 mol-% Einheiten von anderen ethylenisch ungesättigten Monomeren aus der Gruppe N-Vinylformamid, N-Vinylpyrrolidon, N-Vinylcaprolactam, N-Vinylharnstoff, Vinylalkohol, Vinylformiat, Vinylacetat, Vinylpropionat, Acrylsäure und/oder Acrylnitril
enthalten.

Geeignete Aminogruppen enthaltende Polymere sind außerdem Polyamidoamine, die beispielsweise durch Kondensieren von Dicarbonsäuren mit Polyaminen erhältlich sind. Geeignete Polyamidoamine erhält man beispielsweise dadurch, daß man Dicarbonsäuren mit 4 bis 10 Kohlenstoffatomen mit Polyalkylenpolyaminen umsetzt, die 3 bis 10 basische Stickstoffatome im Molekül enthalten. Geeignete Dicarbonsäuren sind beispielsweise Bernsteinsäure, Maleinsäure, Adipinsäure, Glutarsäure, Korksäure, Sebacinsäure oder Terephthalsäure. Bei der Herstellung der Polyamidoamine kann man auch Mischungen von Dicarbonsäuren einsetzen, ebenso Mischungen aus mehreren Polyalkylenpolyaminen. Geeignete Polyalkylenpolyamine sind beispielsweise Diethylentriamin, Triethylentetramin, Tetraethylenpentamin, Dipropylentriamin, Tripropylentetramin, Dihexamethylentriamin, Aminopropylethylendiamin und Bis-aminopropylethylendiamin. Die Dicarbonsäuren und Polyalkylenpolyamine werden zur Herstellung der Polyamidoamine auf höhere Temperaturen erhitzt, z.B. auf Temperaturen in dem Bereich von 120 bis 220, vorzugsweise 130 bis 180°C. Das bei der Kondensation entstehende Wasser wird aus dem System entfernt. Bei der Kondensation kann man gegebenenfalls auch Lactone oder Lactame von Carbonsäuren mit 4 bis 8 C-Atomen einsetzen. Pro Mol einer Dicarbonsäure verwendet man beispielsweise 0,8 bis 1,4 Mol eines Polyalkylenpolyamins.

Weitere Aminogruppen enthaltende Polymere sind mit Ethylenimin gepfropfte Polyamidoamine. Sie sind aus den oben beschriebenen Polyamidoaminen durch Umsetzung mit Ethylenimin in Gegenwart von Säuren oder Lewis-Säuren wie Schwefelsäure oder Bortrifluoridetheraten bei Temperaturen von beispielsweise 80 bis 100°C erhältlich. Verbindungen dieser Art werden beispielsweise in der DE-A-24 34 816 beschrieben.

Um die erfindungsgemäß zu verwendenden Schutzkolloide herzustellen, werden die oben angegebenen Aminogruppen enthaltenden Polymeren mit Diketenen im Gewichtsverhältnis Polymer zu Diketen von 10000 : 1 bis 1 : 3, vorzugsweise 500 : 1 bis 1 : 1 umgesetzt. Für diese Umsetzung können sämtliche Diketenen verwendet werden. Die Diketene können beispielsweise mit Hilfe folgender Formel charakterisiert werden: 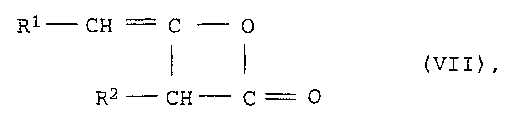 in der
- R¹, R² =: H, C₁- bis C₂₂-Alkyl, C₁₀- bis C₂₂-Alkenyl, C₄- bis C₈-Cycloalkyl, Aryl oder Aralkyl
bedeuten.

R¹ und R² in Formel VII stehen vorzugsweise für gleiche oder verschiedene Alkyl- oder Alkenylreste mit 14 bis 22 C-Atomen.

Bevorzugte wäßrige Dispersionen von Reaktivleimungsmitteln enthalten als Reaktivleimungsmittel C₁₄- bis C₂₂-Alkyldiketene und als Schutzkolloid Umsetzungsprodukte von Vinylamin-Einheiten enthaltenden Polymerisaten mit Diketenen der Formel 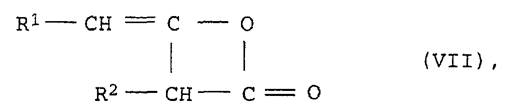 in der
- R¹, R² =: H, C₁ - bis C₂₂-Alkyl, C₁₀- bis C₂₂-Alkenyl, C₄- bis C₈-Cycloalkyl, Aryl oder Aralkyl bedeuten.

Solche Dispersionen enthalten beispielsweise Stearyldiketen, Lauryldiketen, Palmityldiketene, Oleyldiketen, Behenyldiketen oder deren Gemische als Leimungsmittel und Umsetzungsprodukte von hydrolysierten Polymerisaten von N-Vinylformamid mit Stearyldiketen, Lauryldiketen, Palmityldiketen, Oleyldiketen, Behenyldiketen oder deren Gemische als Schutzkolloid.

Andere erfindungsgemäße wäßrige Dispersionen von Reaktivleimungsmitteln enthalten die Umsetzungsprodukte von Polyamidoaminen oder von mit Ethylenimin gepfropften Polyamidoaminen mit Diketenen der Formel VII als Schutzkolloid. Die wäßrigen Dispersionen von Reaktivleimungsmitteln enthalten 0,1 bis 10, vorzugsweise 1 bis 35 Gew.-% an wasserlöslichen oder wasserdispergierbaren polymeren Schutzkolloiden. Die wäßrigen Dispersionen von Reaktivleimungsmitteln können gegebenenfalls zusätzlich 0,001 bis 1,0 Gew.-% mindestens eines anionischen Dispergiermittels enthalten. Geeignete anionische Dispergiermittel sind beispielsweise Ligninsulfonsäure, Kondensate aus Naphthalinsulfonsäure und Formaldehyd, sulfoniertes Polystyrol, C₁₀-C₂₂-Alkylsulfonsäuren, C₁₀-C₂₂-Alkylschwefelsäuren, Salze und Mischungen der genannten Verbindungen.

Um die wäßrigen Dispersionen der Reaktivleimungsmittel herzustellen, homogenisiert man die Reaktivleimungsmittel in einer wäßrigen Lösung mindestens eines Schutzkolloids bei Temperaturen von 20 bis 90°C unter Einwirkung von Scherkräften. Man legt bei diesem Verfahren üblicherweise eine wäßrige Lösung des Schutzkolloids in der notwendigen Konzentration vor, stellt den pH-Wert durch Zugabe von Säuren, z.B. Mineralsäuren wie Schwefelsäure, Salpetersäure oder von organischen Säuren wie Ameisensäure oder Essigsäure auf einen Wert von beispielsweise 3 bis 4. Falls die Leimungsmittel flüssig sein sollten, werden sie in flüssiger Form zugesetzt. Bei festen Leimungsmittel wie beispielsweise Alkyldiketenen wird das Leimungsmittel aufgeschmolzen und in Form einer Schmelze in der wäßrigen Lösung des Schutzkolloids homogenisiert. Die wäßrigen Dispersionen von Reaktivleimungsmitteln enthalten vorzugsweise 10 bis 25 Gew.-% Reaktivleimungsmittel und 1 bis 3,5 Gew.-% mindestens eines der erfindungsgemäß einzusetzenden Schutzkolloide.

Die erfindungsgemäßen wäßrigen Dispersionen von Reaktivleimungsmitteln können gegebenenfalls weitere Hilfsstoffe enthalten, z.B. andere Schutzkolloide wie Stärke, Mono-, Di- und Triglyceride, Fettsäuren sowie deren Ester oder Amide, die in der Literatur als Stabilisatoren für Alkyldiketen-Dispersionen bekannt sind. Bei der Stärke kann es sich um native, anionisch oder kationisch modifizierte Stärke handeln.

Bei den erfindungsgemäßen wäßrigen Dispersionen von Reaktivleimungsmitteln handelt es sich um lager- und scherstabile Dispersionen, die in unterschiedlichen Stoffmodellen wirksam sind. Sie werden vorzugsweise als Leimungsmittel bei der Herstellung von Papier, Pappe und Karton sowie zur Hydrophobierung von Cellulosefasern eingesetzt. Die erfindungsgemäßen Dispersionen können bei der Papierherstellung für sämtliche Papier-, Pappe- und Kartonqualitäten verwendet werden. Die dafür verwendeten Hauptrohstoffkomponenten sind beispielsweise gebleichter und ungebleichter Sulfit- und Sulfatzellstoff, Holzschliff, TMP, CTMP, Druckschliff und Altpapier. Man kann sowohl füllstofffreie als auch füllstoffhaltige Papiere herstellen.

Die in den Beispielen angegebenen K-Werte wurden nach H. Fikentscher, Cellulose-Chemie, Band 13, 58-64 und 71-74 (1932) in wäßriger Lösung bei einer Polymerkonzentration von 1 Gew.-%, einem pH-Wert von 7 und einer Temperatur von 25°C bestimmt. Falls nichts anderes angegeben ist, bedeuten die Angaben in % immer Gewichts-%.

### Beispiele

### Polyvinylamin 1

In einem Kolben, der mit Rührer, Rückflußkühler, Thermometer und Tropftrichter ausgestattet ist, werden 1000 g einer wäßrigen Lösung von Polyvinylformamid mit einem Polymergehalt von 16,5 Gew.-% (2321 mmol Vinylformamid-Einheiten) vom K-Wert 87 (M_{w} ca. 250000) vorgelegt und unter intensivem Rühren auf eine Temperatur von 80°C aufgeheizt. Im Verlauf von 20 Minuten werden 102 g (1275 mmol) 50 %ige wäßrige Natronlauge zugetropft. Danach wird das Reaktionsgemisch noch 5 Stunden bei 80°C gerührt. Nach Abkühlen auf Raumtemperatur wird die Lösung dialytisch von Natriumformiat befreit und destillativ eingeengt. Man erhält 1120 g einer Polymerlösung mit einem Polymergehalt von 11,4 Gew.-%. Das Polymerisat enthält 57 mol-% Vinylamin-Einheiten und 43 mol-% Vinylformamid-Einheiten.

### Polyvinylamin 2

Wie bei der Herstellung von Polyvinylamin 1 beschrieben, setzt man eine Polyvinylformamidlösung mit einem Polymergehalt von 16,5 Gew.-% und einem K-Wert von 87 ein und hydrolysiert das Polymer durch Zugabe von 143 g einer 50 %igen wäßrigen Natronlauge. Man erhält 1050 g einer wäßrigen Polymerlösung mit einem Polymergehalt von 11,0 Gew.-%. Das Polymer besteht aus 76 mol-% Vinylamin-Einheiten und 24 mol-% Vinylformamid-Einheiten.

### Schutzkolloid 1

600 g der Lösung von Polyvinylamin 1 werden in einem Kolben vorgelegt, auf einen pH-Wert von 9 eingestellt und auf eine Temperatur von 80°C erwärmt. Dann tropft man 4,4 g Stearyldiketen in Form einer Schmelze zu. Die Mischung wird anschließend 2 Stunden bei einer Temperatur von 80°C gerührt und danach auf Raumtemperatur abgekühlt. Man erhält eine viskose, milchige Lösung mit einem Feststoffgehalt von 12,1 %.

### Schutzkolloid 2

600 g der Lösung von Polyvinylamin 1 werden in einem Kolben vorgelegt, auf einen pH-Wert von 9 eingestellt und auf eine Temperatur von 80°C erhitzt. Anschließend tropft man 8,803 g Stearyldiketen als Schmelze zu und rührt die Mischung noch 2 Stunden bei 80°C. Danach wird sie auf Raumtemperatur abgekühlt. Man erhält eine viskose, trübe Lösung mit einem Feststoffgehalt von 12,7 %.

### Schutzkolloid 3

600 g der wäßrigen Lösung von Polyvinylamin 2 werden in einem Kolben vorgelegt, auf einen PH-Wert von 9 eingestellt und auf eine Temperatur von 80°C erwärmt. Man tropft dann 4,90 g Stearyldiketen als Schmelze zu und rührt die Mischung anschließend noch 2 Stunden bei einer Temperatur von 80°C. Nach dem Abkühlen auf Raumtemperatur erhält man eine viskose, milchige Lösung mit einem Feststoffgehalt von 11,7 %.

### Schutzkolloid 4

600 g der Lösung von Polyvinylamin 2 werden in einem Kolben vorgelegt, auf einen pH-Wert von 9 eingestellt und auf eine Temperatur von 80°C erwärmt. Anschließend fügt man 9,80 g Stearyldiketen als Schmelze tropfenweise zu. Die Mischung wird danach noch 2 Stunden bei 80°C gerührt und danach auf Raumtemperatur abgekühlt. Man erhält eine viskose, trübe Lösung mit einem Feststoffgehalt von 12,5 %.

### Schutzkolloid 5

150 g der wäßrigen Lösung von Polyvinylamin 1 werden in einem Kolben vorgelegt, auf einen pH-Wert von 9 eingestellt und auf eine Temperatur von 65°C erwärmt. Dann gibt man eine Schmelze von 1,10 g Oleyldiketen tropfenweise zu und erhitzt das Reaktionsgemisch noch 3 Stunden auf eine Temperatur von 65°C. Nach dem Abkühlen auf Raumtemperatur erhält man eine viskose, milchige Lösung mit einem Feststoffgehalt von 12,1 %.

### Schutzkolloid 6

150 g der wäßrigen Lösung von Polyvinylamin 1 werden in einem Kolben vorgelegt, auf einen pH-Wert von 9 eingestellt und auf eine Temperatur von 65°C erwärmt. Sobald diese Temperatur erreicht ist, fügt man 0,95 g Lauryldiketen tropfenweise zu und rührt die Mischung danach noch 3 Stunden bei einer Temperatur von 65°C. Nach dem Abkühlen auf Raumtemperatur erhält man eine viskose, milchige Lösung mit einem Feststoffgehalt von 12,0 %.

Herstellung wäßriger Dispersionen von Reaktivleimmitteln (Beispiele 1-9, nachstehend mit Leimungsmittel 1-9 bezeichnet)

### Leimungsmittel 1

1320 g einer 2,3 %igen wäßrigen Lösung des Schutzkolloids 1 werden durch Zugabe von Ameisensäure auf einen pH-Wert von 3,2 eingestellt. Diese Lösung wird dann mit 1,5 g Ligninsulfonat versetzt und auf eine Temperatur von 80°C erwärmt. Sobald diese Temperatur erreicht ist, gibt man 180 g Stearyldiketen als Schmelze zu und behandelt die Mischung 1 Minute mit einem Ultraturrax. Die anfallende Emulsion wird anschließend zweimal bei 150 bar durch einen Hochdruckhomogenisator geführt und danach abgekühlt.

### Leimungsmittel 2

1200 g einer 3,8 %igen wäßrigen Lösung des Schutzkolloids 2 werden durch Zugabe von Ameisensäure auf einen pH-Wert von 3,3 eingestellt. Die Lösung wird dann mit 1,5 g Natriumligninsulfonat versetzt und auf eine Temperatur von 80°C erwärmt. Man fügt anschließend 300 g Stearyldiketen als Schmelze zu und behandelt die Mischung 1 Minute mit einem Ultraturrax. Diese so erhaltene Emulsion wird danach zweimal bei 150 bar durch einen Hochdruckhomogenisator geführt und auf Raumtemperatur abgekühlt.

### Leimungsmittel 3

1320 g einer 2,3 %igen wäßrigen Lösung des Schutzkolloids 3 werden durch Zugabe von Ameisensäure auf einen pH-Wert von 3,2 eingestellt. Die Lösung wird auf eine Temperatur von 80°C erwärmt. Nach Zugabe von 180 g Stearyldiketen in Form einer Schmelze wird die Mischung 1 Minute mit einem Ultraturrax behandelt. Die dabei entstehende Emulsion wird anschließend zweimal bei 150 bar durch einen Hochdruckhomogenisator geführt und auf Raumtemperatur abgekühlt. Man erhält eine feinteilige stabile wäßrige Dispersion.

### Leimungsmittel 4

1200 g einer 3,8 %igen wäßrigen Lösung des Schutzkolloids 4 werden durch Zugabe von Ameisensäure auf einen pH-Wert von 3,2 eingestellt. Man erwärmt die Lösung auf eine Temperatur von 80°C und fügt anschließend 300 g Stearyldiketen in Form einer Schmelze zu und homogenisiert die Mischung mit einem Ultraturrax. Die dabei entstehende Emulsion wird zweimal bei 150 bar durch einen Hochdruckhomogenisator geführt und danach abgekühlt. Man erhält eine feinteilige stabile wäßrige Dispersion.

### Leimungsmittel 5

1350 g einer 2,3 %igen wäßrigen Lösung des Schutzkolloids 5 werden durch Zugabe von Ameisensäure auf einen pH-Wert von 3,4 eingestellt. Man erwärmt die Lösung auf eine Temperatur von 80°C und gibt dann 150 g Stearyldiketen als Schmelze zu und homogenisiert die Mischung 1 Minute mit einem Ultraturrax. Die dabei anfallende Emulsion wird zweimal bei 150 bar durch einen Hochdruckhomogenisator geführt und danach abgekühlt. Man erhält eine feinteilige stabile wäßrige Dispersion.

### Leimungsmittel 6

1350 g einer 2,3 %igen wäßrigen Lösung des Schutzkolloids 6 werden durch Zugabe von Ameisensäure auf einen pH-Wert von 3,4 eingestellt. Man erwärmt die Lösung auf eine Temperatur von 80°C und gibt 150 g Stearyldiketen als Schmelze zu. Die Mischung wird 1 Minute mit Hilfe eines Ultraturrax-Gerätes homogenisiert. Danach wird die Emulsion zweimal bei 150 bar durch einen Hochdruckhomogenisator geführt und abgekühlt. Man erhält eine stabile feinteilige, wäßrige Dispersion.

### Leimungsmittel 7

1320 g einer 2,9 %igen wäßrigen Lösung des Schutzkolloids 3 werden durch Zugabe von Ameisensäure auf einen pH-Wert von 3,2 eingestellt. Die Lösung wird anschließend auf 80°C erwärmt und mit 180 g Stearyldiketen in Form einer Schmelze versetzt. Die Mischung wird anschließend 1 Minute mit einem Ultraturrax behandelt. Die dabei anfallende Emulsion wird zweimal bei 150 bar durch einen Hochdruckhomogenisator geführt und danach abgekühlt. Man erhält eine stabile, feinteilige Dispersion.

### Leimungsmittel 8

1425 g einer 2,65 %igen Lösung des Schutzkolloids 2 werden durch Zugabe von Ameisensäure auf einen pH-Wert von 3,2 eingestellt. Man fügt 75 g eines C₁₆-/C₁₈-Alkenylbernsteinsäureanhydrids zu und behandelt die Mischung zunächst 0,5 Minuten mit einem Ultraturrax und führt sie anschließend zweimal bei 150 bar durch einen Hochdruckhomogenisator. Die so erhältliche feinteilige Dispersion wird sofort auf einen Feststoffgehalt von 0,5 % verdünnt.

### Leimungsmittel 9

1425 g einer 2,65 %igen Lösung des Schutzkolloids 4 werden durch Zugabe von Ameisensäure auf einen pH-Wert von 3,2 eingestellt. Man gibt dann 75 g eines C₁₆-/C₁₈-Alkenylbernsteinsäureanhydrids zu, behandelt die Mischung zunächst 0,5 Minuten mit einem Ultraturrax-Gerät und homogenisiert sie anschließend zweimal bei 150 bar in einem Hochdruckhomogenisator. Die dabei entstehende feinteilige Dispersion wird sofort auf einen Feststoffgehalt von 0,5 % verdünnt.

**Tabelle 1**

| Physikalische Daten der Leimungsmittel 1 bis 7 | | | | |
|---|---|---|---|---|
| Beispiel Nr. = Leimungsmittel-Nr. | Feststoffgehalt | Leimungsmittel-Konz. | Viskosität nach 30d (in mPas) | Scherstabilität |
| 1 | 14,1 | 12 | 27,0 | gut |
| 2 | 23,1 | 20 | 45,1 | gut |
| 3 | 14,0 | 12 | 23,9 | gut |
| 4 | 23,0 | 20 | 37,4 | gut |
| 5 | 12,1 | 10 | 18,3 | gut |
| 6 | 12,1 | 10 | 21,0 | gut |
| 7 | 14,6 | 12 | 28,4 | gut |

Die oben beschriebenen Leimungsmittel 1 bis 9 werden bei der Herstellung von Papier auf ihre Wirksamkeit als Masseleimungsmittel geprüft. Der Cobb-Test wurde nach DIN 53132 und die Tintenschwimmdauer in Minuten nach DIN 53126 bestimmt. Folgende Stoffmodelle wurden verwendet:

### Stoffmodell I

Man stellt einen Papierstoff mit einer Stoffdichte von 1,0 % aus 100 Teilen Birkensulfatzellstoff und 40 Teilen Kreide her. Der pH-Wert der Stoffsuspension beträgt 7,0, der Mahlgrad 35° SR (Schopper-Riegler). Dem Stoff werden 0,025 %, bezogen auf trockenen Faserstoff, eines handelsüblichen, hochmolekularen Polyacrylamids als Retentionsmittel zugesetzt.

### Stoffmodell II

Man stellt einen Papierstoff mit einer Stoffkonzentration von 1,0 %, bezogen auf trockenen Faserstoff, durch Aufschlagen von 50 Teilen Zeitungen und 50 Teilen Kartonabfällen her. Der pH-Wert der Stoffsuspension beträgt 7,0. Dem Papierstoff werden 0,025 %, bezogen auf trockenen Faserstoff, eines handelsüblichen, hochmolekularen Polyacrylamids als Retentionsmittel zugesetzt.

### Leimungsmittel A

### 12 %ige wäßrige Dispersion von Stearyldiketen, die 2 % eines Schutzkolloids auf Basis eines modifizierten Polyethylenimins (s. Bsp. 4, WO 96/26318) enthält.

Die Wirksamkeit der oben beschriebenen Leimungsmittel 1 bis 9 sowie des Leimungsmittels A wird an den oben angegebenen Stoffmodellen getestet. Um die Leimungswirkung bei Verwendung des Stoffmodells I zu prüfen, verwendete man in allen Fällen 0,1 % der Leimungsmittel. Bei der Prüfung der Leimungsmittel 1 bis 9 am Stoffmodell II setzte man jeweils 0,15 %, bezogen auf trockenen Faserstoff, der in Tabelle 3 angegebenen Leimungsmittel ein.

**Tabelle 2**

| Leimung auf Stoffmodell I | | | |
|---|---|---|---|
| Beispiel | Leimungsmittel | Cobb [g/m²] | Tintenschwimmdauer [Min] |
| 10 | 1 | 26 | 60 |
| 11 | 2 | 24 | 60 |
| 12 | 3 | 27 | 60 |
| 13 | 4 | 24 | 60 |
| 14 | 5 | 25 | 60 |
| 15 | 6 | 25 | 60 |
| 16 | 7 | 26 | 60 |
| 17 | 8 | 25 | 60 |
| 18 | 9 | 26 | 60 |
| Vergleichsbeispiel 1 | A | 27 | 60 |

**Tabelle 3**

| Leimung auf Stoffmodell II | | | |
|---|---|---|---|
| Beispiel | Leimungsmittel | Cobb [g/m²] | Tintenschwimmdauer [Min] |
| 19 | 1 | 30 | 50 |
| 20 | 2 | 28 | 55 |
| 21 | 3 | 31 | 48 |
| 22 | 4 | 28 | 60 |
| 23 | 5 | 29 | 56 |
| 24 | 6 | 29 | 53 |
| 25 | 7 | 30 | 54 |
| 26 | 8 | 30 | 51 |
| 27 | 9 | 29 | 55 |
| Vergleichsbeispiel 2 | A | 58 | 19 |

### Stoffmodell III

Papierstoff einer Stoffdichte von 1 %, bezogen auf trockenen Faserstoff aus 40 Teilen TMP, 30 Teilen gebleichtem Birkensulfatzellstoff, 30 Teilen gebleichtem Kiefernsulfatzellstoff, 15 Teilen Kreide, 0,8 % kaltwasserlöslicher Stärke und 0,02 % hochmolekularem Polyacrylamid, bezogen auf trockenen Faserstoff.

### Leimungsmittel B

20 %ige wäßrige Dispersion von Stearyldiketen, stabilisiert mit 3 % einer handelsüblichen kationischen Stärke.

Eine 20 %ige Stearyldiketendispersion, die nach Beispiel 4 hergestellt wurde, wird im Vergleich zu Leimungsmittel B in steigenden Mengen an Proben von Papierstoffen nach Stoffmodell III geprüft. Die Ergebnisse sind in Tabelle 4 angegeben.

**Tabelle 4**

| Sofortleimung auf Stoffmodell III | | | | | |
|---|---|---|---|---|---|
| Bsp. | Leimungsmittel [%], bezogen auf trockenen Faserstoff | Cobb [g/m²] direkt nach Herstellung des Papiers mit | | Cobb [g/m²] 24 h nach Herstellung des Papiers mit | |
| | | Leimungsmittel 4 | Leimungsmittel B | Leimungs mittel 4 | Leimungsmittel B |
| 28 | 0,3 | 61 | 121 | 51 | 95 |
| 29 | 0,45 | 44 | 113 | 34 | 46 |
| 30 | 0,6 | 35 | 103 | 24 | 29 |
| 31 | 0,75 | 28 | 103 | 24 | 25 |
| 32 | 0,9 | 26 | 98 | 23 | 23 |
| 33 | 1,05 | 25 | 90 | 24 | 22 |
| 34 | 1,2 | 26 | 73 | 22 | 23 |

Bei der Prüfung der Papierblätter direkt nach der Herstellung wurde die Blattfeuchte auf 20 % durch Trocknen bei einer Temperatur von 90°C eingestellt. Bei der Prüfung nach Lagerung wurden die Papierblätter zunächst 10 Minuten bei 90°C getrocknet und anschließend 24 Stunden bei 25°C und 50 % relativer Luftfeuchte klimatisiert.

## Patentansprüche

1. Wäßrige Dispersionen von Reaktivleimungsmitteln mit einem Gehalt von 0,1 bis 10 Gew.-% an wasserlöslichen oder wasserdispergierbaren polymeren Schutzkolloiden, dadurch gekennzeichnet, daß sie als Schutzkolloide Umsetzungsprodukte enthalten, die durch Reaktion von Aminogruppen enthaltenden Polymeren aus der Gruppe der
- Vinylamineinheiten enthaltenden Polymerisate
- Polyamidoamine
- mit Ethylenimin gepfropften Polyamidoamine
mit Diketenen im Gewichtsverhältnis Polymer zu Diketen von 10000 : 1 bis 1 : 3 erhältlich sind.

2. Wäßrige Dispersionen von Reaktivleimungsmitteln nach Anspruch 1, dadurch gekennzeichnet, daß sie als Schutzkolloide Umsetzungsprodukte enthalten, die durch Reaktion von Aminogruppen enthaltenden Polymeren mit Diketenen im Gewichtsverhältnis 500 : 1 bis 1 : 1 erhältlich sind.

3. Wäßrige Dispersionen von Reaktivleimungsmitteln nach Anspruch 1 oder 2, dadurch gekennzeichnet, daß sie als Reaktivleimungsmittel Alkyldiketene oder Alkenylbernsteinsäureanhydride enthalten.

4. Wäßrige Dispersionen von Reaktivleimungsmitteln nach einem der Ansprüche 1 bis 3, dadurch gekennzeichnet, daß sie die Reaktivleimungsmittel in einer Menge von 6 bis 40 Gew.-% enthalten.

5. Wäßrige Dispersionen von Reaktivleimungsmitteln nach einem der Ansprüche 1 bis 4, dadurch gekennzeichnet, daß sie als Reaktivleimungsmittel C₁₄- bis C₂₂-Alkyldiketene enthalten.

6. Wäßrige Dispersionen von Reaktivleimungsmitteln nach einem der Ansprüche 1 bis 4, dadurch gekennzeichnet, daß sie als Reaktivleimungsmittel cyclische Dicarbonsäureanhydride der Formel 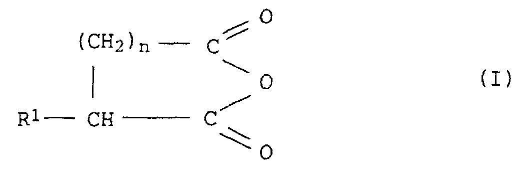 enthalten,
in der
R¹ = C₅- bis C₂₂-Alkyl, C₅- bis C₂₂-Alkenyl und
n = 1 oder 2 ist.

7. Wäßrige Dispersionen von Reaktivleimungsmitteln nach einem der Ansprüche 1 bis 6, dadurch gekennzeichnet, daß sie als Reaktivleimungsmittel C₁₄- bis C₂₂-Alkyldiketene und als Schutzkolloid Umsetzungsprodukte von Vinylamineinheiten enthaltenden Polymerisaten mit Diketenen der Formel 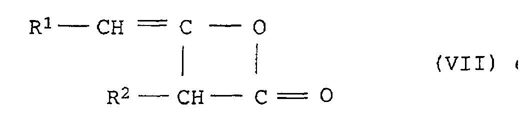 enthalten,
in der
R¹, R² = H, C₁- bis C₂₂-Alkyl, C₁₀- bis C₂₂-Alkenyl, C₄- bis C₈-Cycloalkyl, Aryl oder Aralkyl bedeuten.

8. Wäßrige Dispersionen von Reaktivleimungsmitteln nach einem der Ansprüche 1 bis 6, dadurch gekennzeichnet, daß sie ümsetzungsprodukte von Polyamidoaminen oder von mit Ethylenimin gepfropften Polyamidoaminen mit Diketenen der Formel VII als Schutzkolloid enthalten.

9. Wäßrige Dispersionen von Reaktivleimungsmitteln nach Anspruch 1 oder 2, dadurch gekennzeichnet, daß sie Stearyldiketen, Lauryldiketen, Palmityldiketen, Oleyldiketen, Behenyldiketen oder deren Gemische als Leimungsmittel und Umsetzungsprodukte von hydrolysierten Polymerisaten von N-Vinylformamid mit Stearyldiketen, Lauryldiketen, Palmityldiketen, Oleyldiketen, Behenyldiketen oder deren Gemische als Schutzkolloid enthalten.

10. Wäßrige Dispersionen von Reaktivleimungsmitteln nach einem der Ansprüche 1 bis 9, dadurch gekennzeichnet, daß sie zusätzlich 0,001 bis 1,0 Gew.-% mindestens eines anionischen Dispergiermittels enthalten.

11. Wäßrige Dispersionen von Reaktivleimungsmitteln nach Anspruch 10, dadurch gekennzeichnet, daß man als anionische Dispergiermittel Ligninsulfonsäure, Kondensate aus Naphthalinsulfonsäure und Formaldehyd, sulfoniertes Polystyrol, C₁₀-C₂₂-Alkylsulfonsäuren, C₁₀-C₂₂-Alkylschwefelsäuren, Salze und Mischungen der genannten Verbindungen einsetzt.

12. Verfahren zur Herstellung der wäßrigen Dispersionen nach den Ansprüchen 1 bis 11, dadurch gekennzeichnet, daß man die Reaktivleimungsmittel in einer wäßrigen Mischung mindestens eines Schutzkolloids bei Temperaturen von 20 bis 90°C unter Einwirkung von Scherkräften homogenisiert.

13. Verwendung der wäßrigen Dispersionen von Reaktivleimungsmitteln nach den Ansprüchen 1 bis 12 als Masseleimungsmittel bei der Herstellung von Papier, Pappe und Karton sowie zur Hydrophobierung von Zellulosefasern.

## Claims

1. An aqueous dispersion of a reactive size containing from 0.1 to 10% by weight of water-soluble or water-dispersible polymeric protective colloids, wherein said dispersion contains, as protective colloids, reaction products which are obtainable by reacting amino-containing polymers selected from the group consisting of the
- polymers containing vinylamine units
- polyamidoamines
- ethyleneimine-graft polyamidoamines
with diketenes in a weight ratio of polymer to diketene of from 10,000 : 1 to 1 : 3.

2. An aqueous dispersion of a reactive size as claimed in claim 1, wherein said dispersion contains, as protective colloid, reaction products which are obtainable by reacting amino-containing polymers with diketenes in a weight ratio of from 500 : 1 to 1 : 1.

3. An aqueous dispersion of a reactive size as claimed in claim 1 or 2, wherein said dispersion contains alkyldiketenes or alkenylsuccinic anhydrides as reactive sizes.

4. An aqueous dispersion of a reactive size as claimed in any of claims 1 to 3, wherein said dispersion contains the reactive sizes in an amount of from 6 to 40% by weight.

5. An aqueous dispersion of a reactive size as claimed in any of claims 1 to 4, wherein said dispersion contains C₁₄-C₂₂-alkyldiketenes as reactive sizes.

6. An aqueous dispersion of a reactive size as claimed in any of claims 1 to 4, wherein said dispersion contains, as reactive sizes, cyclic dicarboxylic anhydrides of the formula 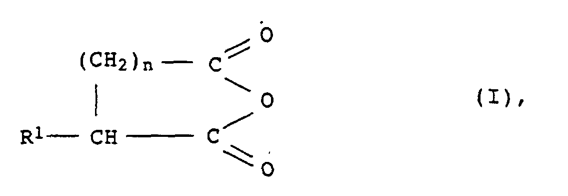 where
R¹ is C₅-C₂₂-alkyl or C₅-C₂₂-alkenyl and
n is 1 or 2.

7. An aqueous dispersion of a reactive size as claimed in any of claims 1 to 6, wherein said dispersion contains, as reactive sizes, C₁₄-C₂₂-alkyldiketenes and, as protective colloid, reaction products of polymers containing vinylamine units with diketenes of the formula 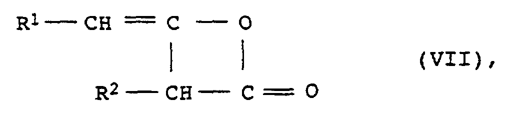 where
R¹ and R² are each H, C₁-C₂₂-alkyl, C₁₀-C₂₂-alkenyl, C₄-C₈-cycloalkyl, aryl or aralkyl.

8. An aqueous dispersion of a reactive size as claimed in any of claims 1 to 6, wherein said dispersion contains reaction products of polyamidoamines or of ethyleneimine-grafted polyamidoamines with diketenes of the formula VII as protective colloid.

9. An aqueous dispersion of a reactive size as claimed in claim 1 or 2, wherein said dispersion contains stearyldiketene, lauryldiketene, palmityldiketene, oleyldiketene, behenyldiketene or a mixture thereof as a size and reaction product of a hydrolyzed polymer of N-vinylformamide with stearyldiketene, lauryldiketene, palmityldiketene, oleyldiketene, behenyldiketene or a mixture thereof as a protective colloid.

10. An aqueous dispersion of a reactive size as claimed in any of claims 1 to 9, wherein said dispersion initially contains from 0.001 to 1.0% by weight of at least one anionic dispersant.

11. An aqueous dispersion of a reactive size as claimed in claim 10, wherein the anionic dispersant used is ligninsulfonic acid, a condensate of naphthalenesulfonic acid and formaldehyde, sulfonated polystyrene, a C₁₀-C₂₂-alkylsulfonic acid, a C₁₀-C₂₂-alkylsulfuric acid or a salt or a mixture of the stated compounds.

12. A process for the preparation of an aqueous dispersion as claimed in any of claims 1 to 11, wherein the reactive sizes are homogenized in an aqueous mixture of at least one protective colloid at from 20 to 90°C under the action of shear forces.

13. The use of an aqueous dispersion of a reactive size as claimed in any of claims 1 to 12 as an engine size in the production of paper, board and cardboard and for imparting water repellency to cellulosic fibers.

## Revendications

1. Dispersions aqueuses d'agents de collage réactifs ayant une teneur de 0,1 à 10% en poids de colloïdes protecteurs, polymères, hydrosolubles ou dispersibles dans l'eau, caractérisées en ce qu'elles contiennent comme colloïdes protecteurs, des produits de réaction que l'on peut obtenir en faisant réagir des polymères contenant des groupes amino choisis dans le groupe formé par
- les polymères contenant des motifs vinylamine
- les polyamidoamines
- les polyamidoamines greffés avec de l'éthylène-imine
avec des dicétènes dans un rapport pondéral de polymère à dicétènes de 10 000:1 à 1:3.

2. Dispersions aqueuses d'agents de collage réactifs selon la revendication 1, caractérisées en ce qu'elles contiennent comme colloïdes protecteurs, des produits de réaction que l'on peut obtenir par réaction de polymères, contenant des groupes amino , avec des dicétènes dans un rapport pondéral de 500:1 à 1:1.

3. Dispersions aqueuses d'agents de collage réactifs selon la revendication 1 ou 2, caractérisées en ce qu'elles contiennent comme agents de collage réactifs, des alkyldicétènes ou des anhydrides alcénylsucciniques.

4. Dispersions aqueuses d'agents de collage réactifs selon l'une quelconque des revendications 1 à 3, caractérisées en ce qu'elles contiennent les agents de collage réactifs en une quantité de 6 à 40% en poids.

5. Dispersions aqueuses d'agents de collage réactifs selon l'une quelconque des revendications 1 à 4, caractérisées en ce qu'elles contiennent comme agents de collage réactifs des (alkyle en C₁₄ à C₂₂)-dicétènes.

6. Dispersions aqueuses d'agents de collage réactifs selon l'une quelconques des revendications 1 à 4, caractérisées en ce qu'elles contiennent comme agents de collage réactifs, des anhydrides dicarboxyliques cycliques de formule (I) 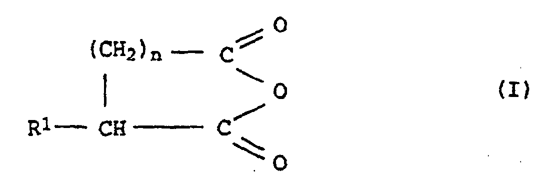 dans laquelle
R¹ représente un groupe alkyle en C₅ à C₂₂, alcényle en C₅ à C₂₂, et
n vaut 1 ou 2.

7. Dispersions aqueuses d'agents de collage réactifs selon l'une quelconques des revendications 1 à 6, caractérisées en ce qu'elles contiennent comme agents de collage réactifs, des (alkyle en C₁₄ à C₂₂)-dicétènes et comme colloïde protecteur, des produits de réaction de polymères contenant des motifs vinylamine avec des dicétènes de formule (VII) 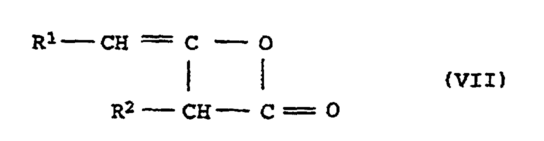 dans laquelle
R¹, R² représentent un atome de H, un groupe alkyle en C₁ à C₂₂, alcényle en C₁₀ à C₂₂, cycloalkyle en C₄ à C₈, aryle ou aralkyle.

8. Dispersions aqueuses d'agents de collage réactifs selon l'une quelconque des revendications 1 à 6, caractérisées en ce qu'elles contiennent des produits de réaction de polyamidoamines ou de polyamidoamines greffés d'éthylène-imine avec des dicétènes de formule VII en tant que colloïdes protecteurs.

9. Dispersions aqueuses d'agents de collage réactifs selon la revendication 1 ou 2, caractérisées en ce qu'elles contiennent le stéaryldicétène, le lauryldicétène, le palmityldicétène, l'oléyldicétène, le béhényldicétène, ou leurs mélanges en tant qu'agents de collage et des produits de réaction de polymères hydrolysés de N-vinylformamide avec le stéaryldicétène, le lauryldicétène, le palmityldicétène, l'oléyldicétène, le béhényldicétène ou leurs mélanges en tant que colloïd protecteur.

10. Dispersions aqueuses d'agents de collage réactifs selon l'une quelconque des revendications 1 à 9, caractérisées en ce qu'elles contiennent en plus 0,001 à 1,0% en poids d'au moins un agent de dispersion anionique.

11. Dispersions aqueuses d'agents de collage réactifs selon la revendication 10, caractérisées en ce que l'on met en oeuvre en tant qu'agents de dispersion anioniques, l'acide lignine-sulfonique, des condensats de l'acide naphtalène-sulfonique et du formaldéhyde, un polystyrène sulfoné, des acides alkylsulfoniques en C₁₀ à C₂₂, des acides alkylsulfuriques en C₁₀ à C₂₂, les sels et mélanges des composés cités.

12. Procédé de préparation de dispersions aqueuses selon les revendications 1 à 11, caractérisé en ce que, l'on homogénéise l'agent de collage réactif dans un mélange aqueux d'au moins un colloïde protecteur à des températures de 20 à 90°C sous l'effet de forces de cisaillement.

13. Utilisation des dispersions aqueuses d'agents de collage réactifs selon les revendications 1 à 12, sous forme d'agents de collage en masse dans la fabrication du papier, du carton-pâte et du carton, ainsi que pour rendre les fibres de cellulose hydrophobes.
